# DEMANDE DE BREVET EUROPEEN

(11) **EP 1 528 233 A1**
(43) Date de publication de la demande: **04.05.2005**
(21) Numéro de dépôt: 04300742.6
(22) Date de dépôt: 28.10.2004
(51) Int. Cl.: F02B 23/00

(54) **Piston pour chambre de combustion destinée à réduire les émissions de suies**

(30) Priorité: 03.11.2003 FR 0350770
(71) Demandeur: Renault s.a.s., 92100 Boulogne Billancourt (FR)
(72) Inventeur: Sakushima, Nobuyaki, Résidence le Gouverneur, 92120 Montrouge (FR)

(57) **Abrégé**

Piston pour chambre de combustion de moteur à injection directe et à allumage par compression formée par un cylindre dans lequel un piston (14) est adapté à courser, le piston (14) présentant une cavité, en forme de bol (18), la surface formant le bol (18) présentant un téton central (20) en saillie et une partie périphérique (23) entourée par une zone de chasse annulaire (24), caractérisée en ce que l'entrée du bol (18) comprend une lèvre (26) dont la face dirigée vers l'intérieur du bol forme un angle voisin de 90° avec un jet de carburant d'un injecteur placé sensiblement dans l'axe du piston (14).

## Description

La présente invention se rapporte à un piston pour une chambre de combustion de moteur multicylindre à injection directe et à allumage par compression selon le cycle Diesel, destinée à réduire les émissions de suies.

Les chambres de combustion destinées aux moteurs à allumage par compression sont formées par un cylindre dans lequel un piston est adapté à coulisser, ledit cylindre étant obturé par une portion de culasse disposée au regard d'une paroi libre du piston.

Différentes formes de paroi libre de piston ont été proposées, tant dans le but d'améliorer le rendement du moteur que dans celui d'augmenter la combustion des suies pour limiter les émissions de fumées.

Ainsi, la plupart des pistons comprennent une cavité formant un bol, Le bord du bol comprend une lèvre ayant principalement pour fonction de guider la combustion dans le fond du bol.

Dans le document US 4721080, le bol comprend une bosse assimilable à une lèvre qui forme un angle d'environ 30° avec l'axe du piston. Cette bosse a pour fonction d'empêcher la combustion de s'étendre dans la, zone de chasse.

Cependant, cette disposition ne prend pas en comme les variations de géométrie de la chambre de combustion et de l'injecteur ainsi que des variations d'implantation de l'injecteur dues à des dispersions de fabrication et de montage. Ces dispersions entraînent des modifications de la distribution du carburant entre le bol et la zone de chasse qui entraîne une mauvaise combustion et donc une augmentation du niveau de polluant dans les gaz d'échappement.

Un objet de la présente invention est de proposer un piston qui permet de résoudre cet inconvénient.

Ce but est atteint par un piston pour chambre de combustion de moteur à injection directe et à allumage par compression formée par un cylindre dans lequel un piston est adapté à coulisser, le piston présentant une cavité en forme de cuvette, la surface formant la cuvette présentant un téton central en saillie et une partie périphérique entourée par une zone de chasse annulaire, caractérisé en ce que l'entrée du bol comprend une lèvre dont la face dirigée vers l'intérieur du bol forme un angle voisin de 90° avec un jet de carburant d'un injecteur placé sensiblement dans l'axe du piston.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la figure 1 représente une vue schématique partielle en coupe d'un piston selon l'invention ; et,
- les figures 2A et 2B représentent chacune une vue schématique partielle en coupe d'un piston selon l'art de la technique.

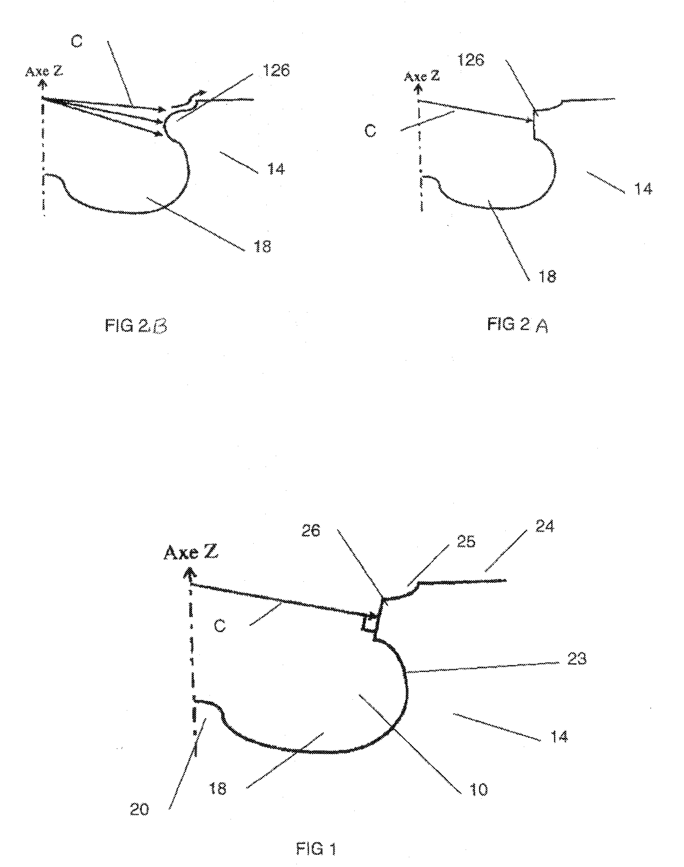

L'invention va à présent être décrite en référence aux figures 1, 2A et 2b. Dans une chambre de combustion d'un moteur à combustion interne à allumage par compression, une forme de révolution a été usinée dans le piston 14 pour former une cavité 10. La chambre de combustion est également délimitée par une portion d'une culasse par exemple à front plat, laquelle referme un cylindre dans lequel le piston 14 peut coulisser.

En outre, la surface formant bol 18 présente une partie périphérique 23 qui est entourée par une zone de chasse annulaire 24 joignant la paroi interne du cylindre, La partie périphérique 23 comprend une lèvre 26 de type ré-entrant.

Les figures 2A et 2B représentent une variante de forme de lèvre 126 de l'état de la technique.

Selon la figure 2A, la lèvre 126 forme sensiblement une surface cylindrique parallèle à l'axe du piston 14. La hauteur de la lèvre 126 est prévue pour prendre en compte une variation de la profondeur d'implantation d'un injecteur placé sensiblement d'ans d'axe du piston 14 de façon à maintenir une distribution du carburant entre le fond du bol 18 et a zone de chasse identique d'un moteur à l'autre. En effet, lors de la fabrication et du montage des moteurs il peut se produire des dispersions géométriques qui génèrent une variation dans l'implantation de l'injecteur. Celui-ci peut pénétrer plus ou moins dans la chambre de combustion.

Cependant, cette forme ne permet pas de prend en compte les variations de l'angle de nappe de l'injecteur. Cette variation est principalement due aux dispersions de fabrication des injecteurs. Ainsi, si l'angle de nappe est plus fermé que l'angle de nappe nominal, la distance entre la buse de l'injecteur et la lèvre est plus grande et la lèvre réfléchit le jet de carburant dans le bol 18. Dans le cas contraire, la lèvre 126 réfléchit le jet de carburant vers le haut ce qui a pour conséquence la formation de suies important lors de la combustion.

Selon la figure 2B, la lèvre 126 est arrondie et de faible épaisseur. Cette forme permet d'optimiser la forme de la cavité en la rendant moins profonde. Par contre, les dispersions de fabrication et de montage des moteurs peuvent provoquer de forte variation de la distribution du carburant dans la zone de chasse ce qui augmente la quantité de polluant généré lors de la combustion.

La Figure 1 illustre une portion de chambre de combustion 10 conforme à l'invention qui est délimitée sur la Figure 1 par une portion d'une culasse (non représentée), par exemple, à front plat d'un moteur, laquelle referme un cylindre dans lequel un piston 14 est situé dans une position de point mort haut.

Le piston 14, présente une cavité usinée autour de l'axe central A du piston 14 de façon à former une surface formant bol 18. Cette surface formant bol 18, présente un téton central 20 en saillie dont l'axe de symétrie est confondu avec l'axe central A du piston 14. Un injecteur en saillie de la portion de culasse situé au regard du piston 14, est destiné à injecter le carburant dans la chambre de combustion 10.

En outre, la surface formant bol 18 présente une partie périphérique 23 qui est entourée par une zone de chasse annulaire 24 joignant la paroi interne du cylindre. Selon l'invention, la partie périphérique 23 comprend une lèvre 26 dans la face interne dirigée vers l'axe du piston est sensiblement perpendiculaire à la direction des jets C de carburant de l'injecteur.

Cette orientation particulière de la lèvre par rapport au jet de carburant permet d'obtenir un angle constant entre les jets C de carburant et la lèvre 26 même en cas de dispersion de fabrication du piston et/ou de l'injecteur. En effet, même en cas de dispersion de l'angle de nappe de l'injecteur angle entre les jets C de carburant et la lèvre reste très voisin de 90°, au plus à 1 ou 2° près. Par conséquent, la répartition de carburant entre le bol 18 et la zone de chasse reste sensiblement la même d'un cylindre à l'autre et d'un moteur à l'autre, et dans tous les cas reste très voisin des conditions nominales.

La surface de la lèvre est sensiblement plane et à une hauteur déterminée pour prendre en compte les variations de position de la buse de l'injecteur dans la chambre de combustion. En effet, même si la hauteur de la buse de l'injecteur varie du fait, par exemple, d'une dispersion géométrique de l'injecteur, les jets C de carburant seront déviés par la lèvre du fait de la hauteur et de la surface plane et ceci de la même façon puisque l'angle d'impact sur la lèvre 26 sera le même (environ 90°).

A titre d'exemple la hauteur de la lèvre sera comprise entre 2 et 8mm.

Afin d'améliorer le guidage du carburant vers la zone de chasse, le bord supérieur du bol 18 comprend un épaulement 25 de forme concave.

## Revendications

1. Piston pour chambre de combustion de moteur à injection directe et à allumage par compression formée par un cylindre dans lequel un piston (14) est adapté à coulisser, !e piston (14) présentant une cavité en forme de bol (18), la surface formant le bol (18) présentant un téton central (20) en saillie et une partie périphérique (23) entourée par une zone de chasse annulaire (24), **caractérisée en ce que** l'entrée du bol (18) comprend une lèvre (26) dont la face dirigée vers l'intérieur du bol forme un angle voisin de 90° avec un jet de carburant d'un injecteur placé sensiblement dans l'axe du piston (14).

2. Piston pour chambre de combustion selon la revendication 1, **caractérisée en ce que** la hauteur de la lèvre (26) est comprise entre 2 et 8mm.

3. Piston pour chambre de combustion selon la revendication 1 ou 2, **caractérisé en ce que** le bord supérieur du bol comprend un épaulement (25) de forme concave.

4. Piston pour chambre de combustion selon la revendication 1 ou 2, **caractérisé en ce que** la surface de la lèvre (26) est plane.
